# EUROPEAN PATENT SPECIFICATION

(11) **EP 3 487 696 B1**
(45) Date of publication and mention of the grant of the patent: **26.02.2020**
(21) Application number: 17761320.5
(22) Date of filing: 17.07.2017
(51) Int. Cl.: B32B 21/02, B32B 5/02, B32B 21/10, B32B 21/14, B32B 25/12, B32B 3/12, B32B 3/26

(54) **STRUCTURAL ELEMENT FOR IMITATION WOOD BOARDS, AND BOARD WITH STRUCTURAL ELEMENT**
STRUKTURELEMENT FÜR IMITATHOLZPLATTEN UND PLATTE MIT STRUKTURELEMENT
ÉLÉMENT STRUCTURAL POUR PANNEAUX EN FAUX-BOIS ET PANNEAU AVEC ÉLÉMENT STRUCTURAL

(30) Priority: 21.07.2016 PL 41803616
(43) Date of publication of application: 29.05.2019
(73) Proprietor: Science Effect Sp. z o.o., 01-793 Warszawa (PL)
(72) Inventor: KLIMKIEWICZ, Artur, 15-375 Bialystok (PL)
(74) Representative: Wroblewski, Marcin Jan
(86) International application number: PCT/IB2017/054298
(87) International publication number: WO 2018/015864

(56) References cited:
- US-A1- 2012 164 388
- US-A1- 2012 183 724
- US-A1- 2015 266 260

## Description

The subject of the invention is a structural element for imitation wood boards, as well as a board with the structural element.

Imitation wood boards are applied in the furniture industry for manufacturing furniture, floor panels and decorative strips, as well as in construction as insulating materials, for both thermal insulation and soundproofing applications, and as construction materials to a certain extent.

When designing new furniture, the durability and strength of materials is taken into consideration, particularly resistance to scratching, impacts and bending. Low price and the lowest possible weight are also very important, however these features run counter to the properties mentioned above. While a board's exterior layer plays the most important role in the case of scratch resistance, the entire material, particularly its interior structure, is significant in the case of strength, particularly flexural strength. In order to combine the seemingly antagonistic properties juxtaposed above, composite materials are applied. Chipboard, in which the chip size depends on the distance from the surface, is an example of such a material. The finest chips make up the surface while the largest form the core. A core built of such chips has a lower degree of material filling than surface layers, reducing the board's density and thus its weight.

Due to the high demand for materials (waste) originating from wood processing, they have become expensive and of limited availability, which is why boards based on lignocellulose fibers not originating from wood were developed. While chipboards are made by joining relatively large wood fragments with resin, fiberboards are made by joining separated lignocellulose fibers with resin. Linen or hemp fibers may be raw materials for manufacturing such boards. These materials endow the board with such properties as low density and high mechanical parameters due to their high Young's modulus, which is comparable to that of glass fiber. Composites containing plant fibers are easy to process and biodegradable. In combination with natural polymers such as rubber or starch, these fibers make it possible to product completely biodegradable composites. The role of polymer binders and matrices may be performed by polysaccharides, particularly starch, cellulose and their derivatives, plant and animal proteins, particularly corn and soy proteins as well as gelatin, and biopolymers.

Patent document US 5,656,129 discloses a method of manufacturing chipboards from raw materials of agricultural origin, such as straw. Stalks are cut, soaked and steamed under high pressure in order to soften them. Stalks prepared in this manner can be mixed in any proportions with other fibrous materials such as fibers originating from wood, and used in wet, dry and wet-dry manufacturing of imitation wood boards.

An example of producing a structural element applied in the furniture industry is known in the current state of the art; document WO 2010138066 reveals a multi-layered board with an interior layer containing conical protuberances. These conical protuberances may have irregular shapes and ribs. In the case of a ring shape, the layer's continuity is interrupted by holes.

Document WO 2001017764 discloses a method of producing a structural element, where the structural element is in the form of a layer with cylindrical protuberances. These protuberances are made from flexible metal film, to which the exterior layers are attached on both sides, forming a light structural element. By introducing internal recesses, the element's weight was significantly reduced while preserving the element's strength.

Moreover, document WO 2006069707 reveals a light structural element made by joining two layers with protuberances. Protuberances are conical in each of the layers, and the empty spaces between cones are filled with the cones of the second layer. The structural element formed in this manner is then joined with two exterior boards, forming a structural element of exceptional strength.

The solution known in the state of the art presented in document DE 37 35 464 reveals a structural element made by joining two layers with protuberances, where every protuberance corresponds to a matching protuberance on the second layer. Protuberances are evenly distributed, and every protuberance on one layer is joined by interlocking with the protuberance on the second layer, forming a permanent connection.

An example of producing a structural element is known in the state of the art from document DE 3900166, in which a layer free of weakness lines was created through the proper selection of the shape of protuberances and their mutual positions, without the need to apply ribs. The structural element is made from a single layer of material with protuberances, forming joining surfaces in the shape of a regular polygon, a circle in a specific instance.

Document EP 2234803 discloses a reinforcing element containing a body with many side walls. The side walls determine a recess into which cells reinforcing the structure's strength are placed. Materials such as structural foam may be placed in the channel, making it possible to obtain a structure with vibration attenuation properties. The presented reinforcing element is used in manufacturing vehicle frames.

Further prior art documents are US 2012/183724 A1, US 2012/164388 A1 and EP 1 555 109 A1.

The gist of the invention is a structural element in the form of a layer of material containing the bottom bearing surface and the primary structures with inclined exterior side walls, protruding upwards, ending with the top bearing surface. According to the invention, the structural element is according to claim 1 and is characterized in that it contains secondary structures with inclined interior side walls, protruding downwards and extending from the top bearing surface of the first structure to the plane determined by the bottom bearing surface of the structural element. The introduction of the secondary bearing structures increases the number of elements that carry loads between the top and bottom bearing surface, thanks to which a structural element of greater strength is obtained while preserving low weight.

Furthermore, the structural element according to the invention is characterized in that the secondary structures are terminated by the bottom bearing element. The bottom bearing element increases the available joining surface from the bottom and also improves the structure's mechanical properties.

Moreover, the structural element according to the invention is characterized by rotational symmetry of at least the fifth order between primary and secondary structures. The introduction of fifth-order axial symmetry makes it possible to density structures corresponding to a unit of surface. Furthermore, it makes it possible to arrange structures on the surface so that no straight line runs between structures, i.e. no lines of significantly lower strength are formed.

In a preferred embodiment, the structural element according to the invention is characterized by inclination of exterior side walls within the range of 2.5° to 30°. Inclination of the exterior walls facilitates production and ensures easier carrying of mechanical loads.

In another preferred embodiment, the structural element according to the invention is characterized by inclination of interior side walls within the range of 2.5° to 30°. Inclination of the interior walls facilitates production and ensures easier carrying of mechanical loads.

Furthermore, the structural element according to the invention may be characterized by regular distribution of primary and secondary structures in the first and second rows. The regularity of the structures' distribution in rows ensures uniform mechanical properties over the entire surface of the structural element.

Moreover, the structural element according to the invention may be characterized in that the primary and secondary structures found in the first rows are rotated relative to their own axes of symmetry by an angle ranging from 0° to 72°, and the primary and secondary structures found in the second rows are rotated relative to their own axes of symmetry by an angle ranging from 0° to 72°. The rotating of structures with axial symmetry between rows makes it possible to easily concentrate structures per unit of surface and eliminates straight lines running between structures.

Furthermore, the structural element according to the invention may be characterized in that the primary and secondary structures are distributed so that the longest straight line running on the bottom bearing surface is shorter than the distance between the two first rows or the two second rows. The elimination of long straight lines running between structures improves the mechanical parameters of the structural element.

The main advantage of the structural element according to the invention is a greater strength of the interior layer. Rotational symmetry of protuberances makes it possible to distribute them over the layer's surface in a manner eliminating weakness lines responsible for the element's susceptibility to bending. Every protuberance consists of two counterposed cones.

The object of the invention is presented in greater detail in a good production example in the figure, which shows:
- Fig. 1A: an isometric view of the structural element;
- Fig. 1B: a detailed view of the structural element;
- Fig. 2A: an isometric view of the board built on the basis of the structural element;
- Fig. 2B: a detailed view of the board with two exterior flat panels.

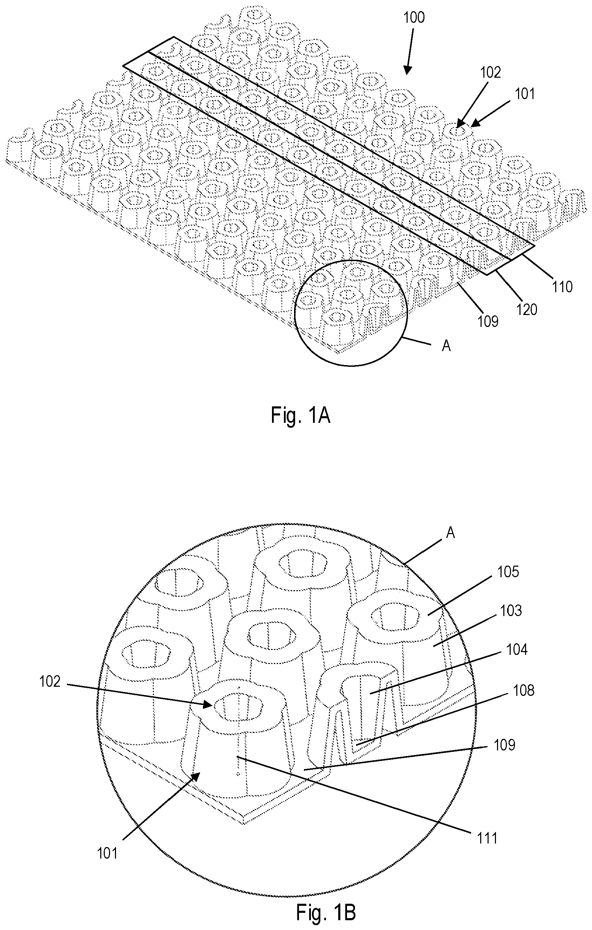

Fig. 1A presents structural element (100). Structural element (100) has the form of a layer of uniform thickness with regularly distributed structures (101, 102). The structures (101, 102) are distributed alternatingly in the first rows (110) and second rows (120). The detailed appearance of the structures (101, 102) is visible in partial view A in fig. 1B. An individual primary structure (101) has the form of a protuberance with inclined exterior side walls (103), protruding above the bearing surface (109) and terminated by the top bearing surface (105). The top bearing surface (105) is parallel to the bottom bearing surface (109), and the top bearing surfaces (105) of all primary structures (101) are found on a common plane. The secondary structure (102) with the form of a protuberance oriented towards the bottom bearing surface (109) is placed on the top bearing surface (105). The secondary structure (102) has inclined interior side walls (104) and is terminated by the bottom bearing element (108). Bottom bearing elements (108) are found on a common plane parallel to the plane determined by the bottom bearing surface (109). Both planes may overlap. The inclination of the exterior side wall (103) of the primary structure (101) and inclination of the interior side wall (104) of the secondary structure (102) may range from 2.5 to 30°, however it must be emphasized that the inclination of the exterior side wall (103) may differ from the inclination of the interior side wall (104). The presence of bottom bearing elements (108) significantly increases the crushing strength of the structural element (100) through the introduction of additional load-carrying surfaces. This feature facilitates storage and has a direct influence of the properties of a product based on such a structural element.

In the example presented in fig. 1A and 1B, the structures (101, 102) have a radial symmetry of the fifth order, but the solution also includes structures with a radial symmetry of higher orders. For example, the solution may also include structures with a sixth- or seventh-order symmetry. Structures (101, 102) found in the first rows (110) are rotated relative to their own axes of symmetry by an angle of 30°, but the solution also includes angles within the range of 0° to 72°, which, in combination with a radial structure of at least the fifth order, signifies any angular orientation of the structures (101, 102) found in the first rows (110) relative to the angular orientation of the structures (101, 102) found in the second rows (120). The combination of radial symmetry of the structures (101, 102) of at least the fifth order along with alternating the angular orientation of the structures (101, 102) in rows (110, 120) also enables such a distribution of structures (101, 102) that the longest straight line running on the bottom bearing surface (109) is shorter than the distance between the two first rows (110) or two seconds rows (120), with greater spacing of structures (101, 102) than in the case of structures with lower-order symmetry. As a result, the produced structural element (100) is characterized by high flexural strength. The radial symmetry of structures (101, 102) also improves impact resistance.

The basic shape of structural element (100) can be described as a double tapered cone. This shape endows final products with their mechanical properties, including high flexural strength and resistance to pressing force. The double tapered cone shape means that the number of individual surfaces carrying loads between surfaces of the board built on the basis of the structural element according to the invention is doubled compared to solutions known in the state of the art. As presented on Fig. 1B the primary structures (101) are composed of the arched protruding sections. The arched protruding sections of the primary structures (101) are curved in such way that the radius of the curvature of the individual arched protruding section is smaller than the radius of the primary structures (101). Advantageously, the primary structures (101) are composed of the five arched protruding sections.

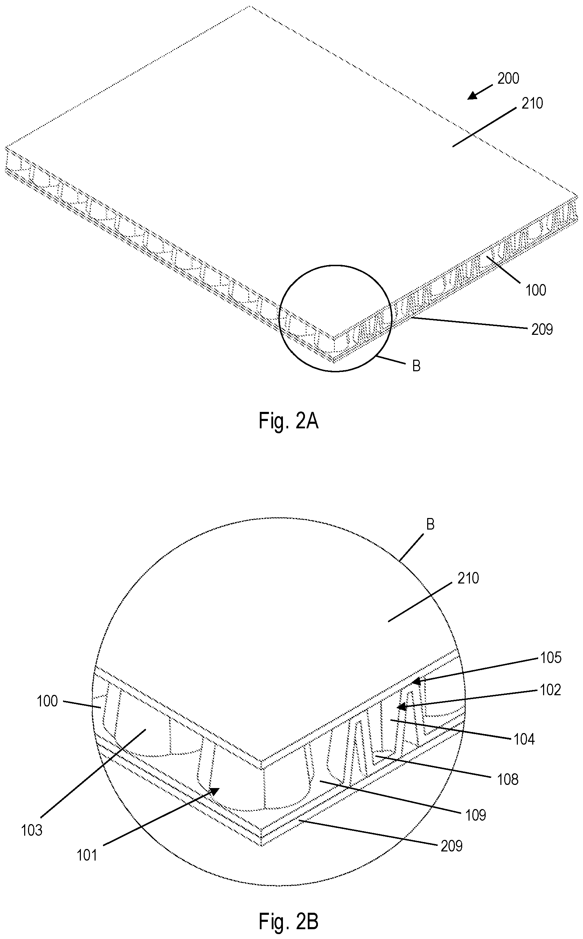

Fig. 2A presents a board (200) according to claim 8, built on the basis of structural element (100). Structural element (100) is found between the bottom panel (209) and the top panel (210). Fig. 2B presents partial view B, illustrating the details of joining the structural element (100) with panels (209, 210). The panels (209, 210) are joined with structural element (100) by means of a binder in such a manner that the bottom panel (209) is joined with the bottom bearing surface (109) and with the bottom bearing elements (108), while the top panel (210) is joined with the top bearing surface (105).

Fig. 2B clearly shows the introduction of secondary structures (102) with inclined interior side walls (104), protruding downwards and running from the top bearing surface (105) of the primary structure (101) to the plane determined by the bottom bearing surface (109) of the structural element (100). The solution according to the invention significantly increases the strength of the entire element. Furthermore, it can be seen that the secondary structures (102) are terminated by the bottom bearing element (108), which constitutes an additional supporting surface and carries additional loads during the board's use. The secondary structures (102) also increase the contact surfaces between the structural element (100) and the bottom panel (209), which has a positive impact on increasing the joint's durability.

Materials known in the state of the art, such as materials (waste) originating from wood processing and lignocellulose fibers not originating from wood, can be used to manufacture the structural element (100). The structural element (100) can be made by joining relatively large wood fragments using a binder, particularly resin, but also by joining separated lignocellulose fibers with a binder. Linen or hemp fibers may be raw materials for manufacturing structural elements. In particular, natural polymers such as rubber or starch, which make it possible to manufacture completely biodegradable composites, can be applied as binders in the manufacturing of structural elements. In the manufacturing of structural elements as well as boards built with their use, the role of polymer binders and matrices may be performed by polysaccharides, particularly starch, cellulose and their derivatives, plant and animal proteins, particularly corn and soy proteins as well as gelatin, and biopolymers.

## Claims

1. A structural element (100) in the form of a layer of material, comprising
a bottom bearing surface (109) and
primary structures (101), protruding upwards, with inclined exterior side walls (103), terminated by a top bearing surface (105);
**characterized in that** it also comprises
secondary structures (102) placed inside the primary structures (101), while secondary structures (102) with inclined interior side walls (104), protruding downwards and running from the top bearing surface (105) of the primary structure (101) to the plane determined by the bottom bearing surface (109) of the structural element (100), wherein
the primary structures (101) are composed of arched protruding sections, and
primary structures (101) and secondary structures (102) with rotational symmetry of at least the fifth order.

2. A structural element according to claim 1, **characterized in that** the secondary structures (102) are terminated by a bottom bearing element (108).

3. A structural element according to claims 1 or 2, **characterized by** an inclination of exterior side walls (103) ranging from 2.5° to 30°.

4. A structural element according to any of the claims from 1 to 3, **characterized by** an inclination of interior side walls (104) ranging from 2.5° to 30°.

5. A structural element according to any of the claims from 1 to 4, **characterized by** primary and secondary structures (101) regularly distributed in the first rows and second rows.

6. A structural element according to claim 5, **characterized in that** the primary structures (101) and the secondary structures (102) found in the first rows (110) are rotated relative to their own axes of symmetry by an angle ranging from 0° to 72°, and the primary structures (101) and the secondary structures (102) found in the second rows (120) are rotated relative to their own axes of symmetry by an angle ranging from 0° to 72°.

7. A structural element according to any of the claims from 1 to 6, **characterized in that** the primary and secondary structures (101, 102) are distributed so that the longest straight line running on the bottom bearing surface (109) is shorter than the distance between the two first rows (110) or the two second rows (120).

8. A board (200) comprising
a bottom panel (209),
a top panel (210);
**characterized in that** it also comprises
a layer of material that has
a bottom bearing surface (109) and
primary structures (101), protruding upwards, with inclined exterior side walls (103), terminated by a top bearing surface (105); as well as
secondary structures (102) placed inside the primary structures (101), secondary structures (102) with inclined interior side walls (104), protruding downwards and running from the top bearing surface (105) of the primary structure (101) to the plane determined by the bottom bearing surface (109) of the structural element (100), wherein
the primary structures (101) are composed of arched protruding sections, and
primary structures (101) and secondary structures (102) with rotational symmetry of at least the fifth order.

## Patentansprüche

1. Ein Strukturelement (100) in Form einer Materialschicht, umfassend eine untere Tragfläche (109) und
nach oben ragende Primärstrukturen (101) mit geneigten äußeren Seitenwänden (103), die durch eine obere Tragfläche (105) abgeschlossen sind;
**dadurch gekennzeichnet, dass** es auch
Sekundärstrukturen (102) umfasst, die innerhalb der Primärstrukturen (101) angeordnet sind, während die Sekundärstrukturen (102) mit geneigten inneren Seitenwänden (104), die nach unten ragen und von der oberen Tragfläche (105) der Primärstruktur (101) zu der durch die untere Tragfläche (109) des Strukturelements (100) bestimmten Ebene verlaufen, wobei
die Primärstrukturen (101) aus gewölbten, vorstehenden Abschnitten zusammengesetzt sind, und
die Primärstrukturen (101) und die Sekundärstrukturen (102) die Rotationssymmetrie mindestens fünfter Ordnung aufweisen.

2. Ein Strukturelement nach Anspruch 1, **dadurch gekennzeichnet, dass** die Sekundärstrukturen (102) durch ein unteres Tragelement (108) abgeschlossen sind.

3. Ein Strukturelement nach Anspruch 1 oder 2, **gekennzeichnet durch** eine Neigung der äußeren Seitenwände (103) im Bereich von 2,5° bis 30°.

4. Ein Strukturelement nach einem der Ansprüche von 1 bis 3, **gekennzeichnet durch** eine Neigung der inneren Seitenwände (104) im Bereich von 2,5° bis 30°.

5. Ein Strukturelement nach einem der Ansprüche von 1 bis 4, **gekennzeichnet durch** die Primär- und Sekundärstrukturen (101), die in den ersten Reihen und zweiten Reihen regelmäßig verteilt sind.

6. Ein Strukturelement nach Anspruch 5, **dadurch gekennzeichnet, dass** die Primärstrukturen (101) und die Sekundärstrukturen (102), die sich in den ersten Reihen (110) befinden, relativ zu ihren eigenen Symmetrieachsen um einen Winkel im Bereich von 0° bis 72° gedreht werden und die Primärstrukturen (101) und die Sekundärstrukturen (102), die sich in den zweiten Reihen (120) befinden, relativ zu ihren eigenen Symmetrieachsen um einen Winkel im Bereich von 0° bis 72° gedreht werden.

7. Ein Strukturelement nach einem der Ansprüche von 1 bis 6, **dadurch gekennzeichnet, dass** die Primär- und Sekundärstrukturen (101, 102) so verteilt sind, dass die längste gerade Linie, die auf der unteren Tragfläche (109) verläuft, kürzer ist als der Abstand zwischen den beiden ersten Reihen (110) oder den beiden zweiten Reihen (120).

8. Eine Platte (200), umfassend
eine untere Platte (209) und eine obere Platte (210); **dadurch gekennzeichnet, dass** auch eine Materialschicht umfasst, die
eine untere Tragfläche (109) und
nach oben ragende Primärstrukturen (101) mit geneigten äußeren Seitenwänden (103), die durch eine obere Tragfläche (105) abgeschlossen sind; sowie Sekundärstrukturen (102) aufweist, die innerhalb der Primärstrukturen (101) angeordnet sind, während die Sekundärstrukturen (102) mit geneigten inneren Seitenwänden (104), die nach unten ragen und von der oberen Tragfläche (105) der Primärstruktur (101) zu der durch die untere Tragfläche (109) des Strukturelements (100) bestimmten Ebene verlaufen, wobei
die Primärstrukturen (101) aus gewölbten, vorstehenden Abschnitten zusammengesetzt sind, und
die Primärstrukturen (101) und die Sekundärstrukturen (102) die Rotationssymmetrie mindestens fünfter Ordnung aufweisen.

## Revendications

1. Un élément structurel (100) sous la forme d'une couche de matériau, comprenant une surface d'appui inférieure (109) et
des structures primaires (101), faisant saillie vers le haut, avec des parois latérales extérieures inclinées (103), terminées par une surface d'appui supérieure (105);
**caractérisé en ce qu'**il comprend en outre
des structures secondaires (102) placées à l'intérieur des structures primaires (101), des structures secondaires (102) avec des parois latérales intérieures inclinées (104) faisant saillie vers le bas et s'étendant de la surface d'appui supérieure (105) de la structure primaire (101) à la plan déterminé par la surface d'appui inférieure (109) de l'élément structurel (100), dans lequel
les structures primaires (101) sont composées de sections saillantes arquées, et
les structures primaires (101) et secondaires (102) présentant une symétrie de rotation d'au moins le cinquième ordre.

2. Un élément structurel selon la revendication 1, **caractérisé en ce que** les structures secondaires (102) sont terminées par un élément d'appui inférieur (108).

3. Un élément structurel selon les revendications 1 ou 2, **caractérisé par** une inclinaison des parois latérales extérieures (103) allant de 2,5° à 30°.

4. Un élément structurel selon l'une quelconque des revendications 1 à 3, **caractérisé par** une inclinaison des parois latérales intérieures (104) allant de 2,5° à 30°.

5. Un élément structurel selon l'une quelconque des revendications 1 à 4, **caractérisé par** les structures primaire et secondaire (101) régulièrement réparties dans les premières rangées et deuxième rangées.

6. Un élément structurel selon la revendication 5, **caractérisé en ce que** les structures primaires (101) et les structures secondaires (102) trouvées dans les premières rangées (110) sont tournées par rapport à leurs propres axes de symétrie selon un angle allant de 0° à 72°, et les structures primaires (101) et les structures secondaires (102) trouvées dans les deuxièmes rangées (120) sont tournées par rapport à leurs propres axes de symétrie selon un angle allant de 0° à 72°.

7. Un élément structurel selon l'une quelconque des revendications 1 à 6, **caractérisé en ce que** les structures primaire et secondaire (101, 102) sont réparties de sorte que la plus longue ligne droite s'étendant sur la surface d'appui inférieure (109) soit plus courte que la distance entre les deux premières rangées (110) ou les deux secondes rangées (120).

8. Une planche (200) comprenant
un panneau inférieur (209), un panneau supérieur (210) ; **caractérisée en ce qu'**elle comprend en outre une couche de matériau qui a
une surface d'appui inférieure (109) et
des structures primaires (101), faisant saillie vers le haut, avec des parois latérales extérieures inclinées (103), terminées par une surface d'appui supérieure (105) ; ainsi que
des structures secondaires (102) placées à l'intérieur des structures primaires (101), des structures secondaires (102) avec des parois latérales intérieures inclinées (104) faisant saillie vers le bas et s'étendant de la surface d'appui supérieure (105) de la structure primaire (101) à la plan déterminé par la surface d'appui inférieure (109) de l'élément structurel (100), dans laquelle
les structures primaires (101) sont composées de sections saillantes arquées, et
les structures primaires (101) et secondaires (102) présentant une symétrie de rotation d'au moins le cinquième ordre.
